# EUROPÄISCHE PATENTSCHRIFT

(11) **EP 1 891 403 B1**
(45) Veröffentlichungstag und Bekanntmachung des Hinweises auf die Patenterteilung: **12.02.2014**
(21) Anmeldenummer: 06753964.3
(22) Anmeldetag: 30.05.2006
(51) Int. Cl.: G01G 21/22, G01G 21/00

(54) **WÄGEANLAGE**
WEIGHING SYSTEM
INSTALLATION DE PESEE

(30) Priorität: 03.06.2005 DE 102005025534
(43) Veröffentlichungstag der Anmeldung: 27.02.2008
(73) Patentinhaber: Sartorius Lab Instruments GmbH & Co. KG, 37075 Göttingen (DE)
(72) Erfinder: LAUBSTEIN, Michael, 37077 Göttingen (DE); KUHLMANN, Otto, 37085 Göttingen (DE); ERBEN, Detlev, 37078 Göttingen (DE); HEINE, August, 37434 Bodensee (DE); LAUKE, Jürgen, 37124 Rosdorf (DE)
(74) Vertreter: Müller-Boré & Partner Patentanwälte PartG mbB
(86) Internationale Anmeldenummer: PCT/EP2006/005128
(87) Internationale Veröffentlichungsnummer: WO 2006/128666

(56) Entgegenhaltungen:
- EP-A- 1 400 789
- DE-A1- 10 242 118
- US-A- 4 794 365
- US-A1- 2003 218 467
- US-B1- 6 615 638
- PATENT ABSTRACTS OF JAPAN Bd. 1999, Nr. 08, 30. Juni 1999 (1999-06-30) & JP 11 083645 A (KAWATETSU ADVANTEC KK), 26. März 1999 (1999-03-26)

## Beschreibung

Die Erfindung bezieht sich auf ein Wägemodul sowie eine Wägeanlage mit mehreren Wägemodulen zur separaten Verwiegung von mehreren Wägegütem.

### Stand der Technik

Als Wägezellen werden Funktionseinheiten zur Massebestimmung bezeichnet, die innerhalb eines Gehäuses ein Wägesystem sowie eine für den Betrieb notwendige Elektronik, in der auch die für das Wägesystem spezifischen Abgleichparameter gespeichert sind, beinhalten. Die nachgeordnete Elektronik, z.B. die Signalverarbeitungseinheit, kann sowohl innerhalb als auch außerhalb der Wägezelle angeordnet sein.

Mehrfachanordnungen von einzelnen Wägezellen in Wägeanlagen sind dem Fachmann bekannt. Diese werden in industriellen Prozessen überall dort benötigt, wo innerhalb von kurzen Zeitintervallen die Massebestimmung von sehr vielen einzelnen kleinen Wägegütern, oft mit geringen Einzelmassen, notwendig ist. Beispiele hierfür findet der Fachmann z.B. bei Dosier- und Qualitätsüberwachungsprozessen etwa in der pharmazeutischen Industrie.

Maßgeblich für die Größe einer Wägezelle ist die geometrische Ausdehnung des Wägesystems. Auf Grund der relativ zum Wägegut großen geometrischen Ausdehnung der für solche Prozesse geeigneten Wägesysteme handelt es sich hierbei fast ausschließlich um einreihige lineare Anordnungen von Wägezellen. Hier ist es nur bei Einsatz besonders schmaler Wägesysteme möglich, die einzelnen Lastaufnehmer mit geringen Abständen zueinander anzuordnen.

Geometrisch größere Wägesysteme können hierzu auch in der Höhe zueinander gestaffelt angeordnet sein, wobei an den Krafteinleitungspunkten der Wägesysteme befestigte spezielle Ausleger es ermöglichen, die einzelnen Lastaufnehmer mit geringem Abstand zueinander anzuordnen. Hierbei sind die einzelnen Ausleger an den Wägesystemen in Abhängigkeit von der Lage der Wägezelle innerhalb der Wägeanlage individuell verschieden. Eine solche Anordnung ist aus der US 6,615,638 B1 bekannt. Der Aufwand für die Konstruktion und Montage von Wägeanlagen dieser Art ist sehr hoch, da jede einzelne Wägezelle innerhalb der Wägeanlage individuell verschieden ist. Dieses stellt auch für den Service und die Reparatur von solchen Wägeanlagen ein Problem dar. Die Realisierung von funktionssicheren Anordnungen von Wägezellen, etwa in einem zweidimensionalen Array, mit geringen Abständen der einzelnen Lastaufnehmer untereinander, etwa im Bereich von einem bis zu fünf Zentimetern und einer Lagetoleranz der Lastaufnehmer von wenigen Zehntelmilimetem, ist mit den bekannten Wägezellen nur mit sehr hohem Aufwand möglich.

Druckschrift EP 1 400 789 A2 offenbart eine elektrische Strom- und Kommunikationssignalverteilungseinheit. Diese Einheit kann beispielsweise in Wiegevorrichtungen eingesetzt werden. Die Wiegevorrichtung umfaßt eine Vielzahl von Wägeköpfen, welche jeweils einen Wägebehälter, eine Lastzelle bzw. Kraftmessdose und eine Elektronik umfassen. Ferner sind die Wägeköpfe alle im wesentlichen identisch ausgebildet, lösbar mechanisch fixiert und elektrisch kontaktiert.

Druckschrift US 2003/0218467 A1 offenbart eine Vorrichtung zum Beobachten von Massenänderungen von sehr kleinen Materialmengen. Die dort beschriebene Vorrichtung dient insbesondere zur Detektion von Massenänderungen des Wägegutes, z.B. durch Feuchtigkeitsaufnahme. Ferner wird offenbart, daß die Massenänderungen durch das Verstimmen eines Resonators erfolgt, wobei eine Vielzahl von Resonatoren in einem zwei-dimensionalen Array angeordnet werden können.

Druckschrift US 4 794 365 offenbart einen Drucksensor in Form eines Koaxialkabels, wobei die Drucksensoren in einem zwei-dimensionalen Array angeordneten werden können.

### Aufgabenstellung

Es ist Aufgabe der Erfindung, eine Wägeanlage bereitzustellen, die eine einfache und kostengünstige Montage erlaubt und den Service vereinfacht.

Diese Aufgabe wird durch ein Wägemodul und eine Wägeanlage mit den unabhängigen Ansprüchen angegebenen Merkmalen gelöst. Bevorzugte Ausführungsformen ergeben sich aus den Unteransprüchen.

Beispielsweise wird dies dadurch erreicht, dass die Wägezellen der Wägeanlage im Wesentlichen identisch ausgebildet und in einem zweidimensionalen Array austauschbar angeordnet sind und Mittel zur lösbaren mechanischen Fixierung auf einem Trägerelement sowie Mittel zur elektrischen Kontaktierung aufweisen.

Bedingt durch die Tatsache, dass die Wägezellen in der Wägeanlage identisch und einzeln entnehmbar sind, reicht für den Service- oder Reparaturfall die Bevorratung einer Wägezelle aus. Durch geeignete Ausgestaltung der Fixiermittel kann ein sehr genaues Einsetzen der einzelnen Wägezelle in die Anlage erreicht werden, ohne dass weiterer Justage- oder Abgleichaufwand entsteht oder die gesamte Wägeanlage im Servicefall demontiert werden muss. Mit dem Einsetzen werden auch die für den Betrieb der Wägezelle notwendigen elektrischen Verbindungen über Steckkontakte hergestellt. Die in der Wägezelle enthaltene Elektronik stellt neben dem Wägesignal einer nachgeordneten Signalverarbeitungseinheit die für die Wägezelle typischen Abgleichparameter zu Verfügung.

In einer bevorzugten Ausführungsform dient ein Trägerelement, z.B. eine Platte mit wabenförmigen Ausbrüchen, der Aufnahme und mechanischen Fixierung der einzelnen Wägezellen. Die genaue Fertigung dieser Trägerplatte sowie die der komplementären Gegenelemente an den Wägezellen ermöglicht eine genaue Positionierung der einzelnen Wägezellen sowohl in horizontaler x,y-Richtung als auch in vertikaler z-Richtung. Eine Reduzierung eines möglichen Kippfehlers der einzelnen Wägezellen und damit die abstandsgenaue Ausrichtung der Lastaufnehmer der einzelnen Wägezellen wird vorteilhafterweise durch eine in z-Richtung von der Trägerplatte beabstandete Fixierplatte gewährleistet, deren relative Lage zur Trägerplatte wiederum durch entsprechende Fixierelemente bestimmt wird. Die elektrische Kontaktierung der für den Betrieb notwendigen Elektronik der einzelnen Wägezellen mit der nachgeordneten Signalverarbeitungseinheit erfolgt im einfachsten Fall mit Hilfe von Steckkontakten über eine Verdrahtungsplatine , wobei jeder Wägezelle ein bestimmter Steckplatz auf der Verdrahtungsplatine zugeordnet ist.

In einer besonders bevorzugten Ausführungsform befindet sich die Verdrahtungsplatine in z-Richtung beabstandet unterhalb der Trägerplatte. Die Platine der für den Betrieb der einzelnen Wägezellen notwendigen Elektronik trägt hierbei einen Stecker der zum entsprechenden Steckplatz auf der Verdrahtungsplatine so angeordnet ist, dass die elektrische Kontaktierung gleichzeitig mit der mechanischen Positionierung der Wägezellen auf der Trägerplatte erfolgt.

Die Vorteile werden besonders bei Wägeanlagen, bei denen Wägezellen in einem zweidimensionalen Array mit mindestens 3x3 Elementen angeordnet werden sollen, sichtbar.

Erfindungsgemäß sind jeweils zwei Wägezellen und deren Elektroniken zu einem Wägemodul mit zwei Lastaufnehmem zusammengefasst. Durch platzsparende Anordnung der zwei Wägesysteme zueinander sowie Anordnung der beiden für den Betrieb der Wägezellen notwendigen Elektroniken auf einer gemeinsamen Platine ist es möglich, den Platzbedarf eines Wägemodules gegenüber zwei einzelnen Wägezellen nochmals zu reduzieren. Außerdem ist durch die Bildung eines Wägemoduls auch eine rechteckige Bauform der Wägesysteme möglich: Bei einzelnen Wägezellen innerhalb eines in x- und y-Richtung äquidistanten Arrays muss das einzelne Wägesystem zumindest nahezu quadratisch sein. Bei einem Wägemodul mit einem Seitenverhältnis 1:2 können die beiden enthaltenen Wägesysteme in Längsrichtung angeordnet sein, so dass für das einzelne Wägesystem ein Seitenverhältnis von 1:4 möglich ist. Das kommt der üblichen konstruktiven Gestaltung des einzelnen Wägesystems entgegen.
Selbstverständlich ist auch die Integration von mehr als zwei Wägezellen innerhalb eines Wägemoduls möglich.

Durch ein das Wägemodul umschließendes Gehäuse wird im Zusammenwirken mit den bereits beschriebenen Funktionselementen eine Einheit gebildet, die einen einfachen Austausch von einzelnen Wägemodulen ohne Justage- und Abgleichaufwand gewährleistet.

### Ausführungsbeispiel

Die Erfindung wird im folgenden anhand der **Fig.1** bis **3** näher beschrieben.
Dabei zeigt
**Fig. 1** ein Wägemodul mit zwei Wägesystemen und deren Lastaufnehmern, einer für die beiden Wägesysteme gemeinsamen Elektronik, dem gemeinsamen Gehäuse und den für die Ausrichtung innerhalb der Wägeanlage erforderlichen Mitteln für die mechanische Fixierung,
**Fig. 2** eine Wägeanlage mit einem Trägerelement und einigen darauf angeordneten Wägemodulen, einer in z-Richtung beabstandeten Fixierplatte und einer unterhalb des Trägerelementes angeordneten Verdrahtungsplatine mit den einzelnen, den jeweiligen Wägemodulen zugeordneten Steckplätzen,
**Fig. 3** ein Trägerelement in der Draufsicht und einige darauf angeordnete Wägemodule.

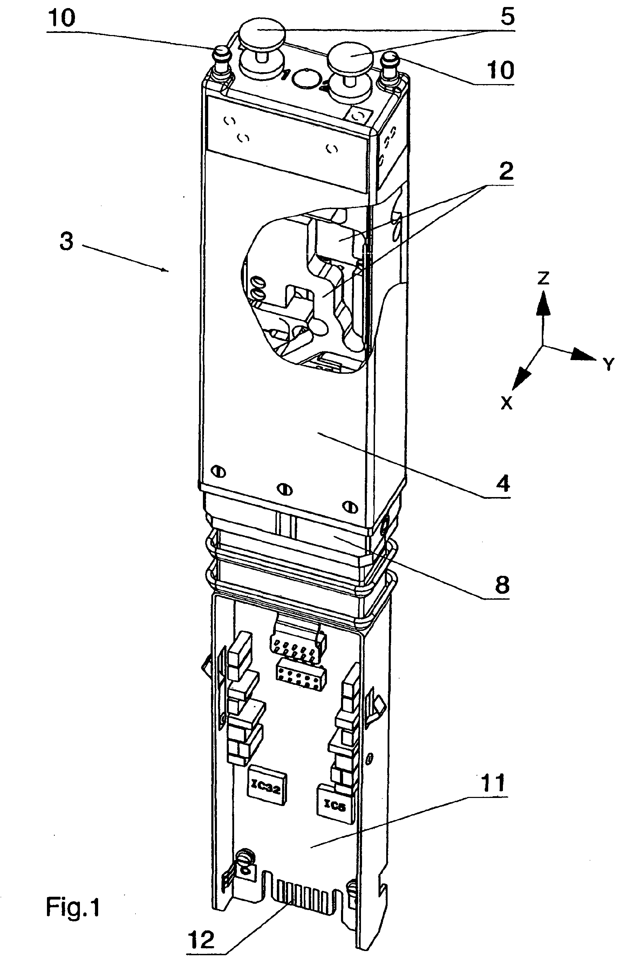

Wie aus Fig.1 hervorgeht, sind innerhalb eines gemeinsamen Gehäuses 4 zwei identische Wägesysteme 2 zu einem Wägemodul 3 zusammengefasst. Das Gehäuse 4 besitzt Durchtritte für die Lastaufnehmer 5 der beiden Wägesysteme 2 sowie in deren Nähe angeordnete Fixierelemente 10. Der Bund 8 dient zur Aufnahme und Ausrichtung in x-, y-, und z-Richtung des Wägemoduls 3 in einem hier nicht dargestellten Trägerelement 6, während die Fixierelemente 10 in eingebautem Zustand im Zusammenwirken mit den komplementären Ausnehmungen der in Fig. 1 ebenfalls nicht dargestellten Fixierplatte 9 eine Verdrehung um eine der drei Raumachsen verhindern. Mögliche geometrische Gestaltungen des Bundes 8 und der Fixierelemente 10 sowie deren komplementärer Ausnehmungen in der Fixierplatte 9 sind dem Fachmann geläufig und sollen daher nicht weiter Gegenstand der Beschreibung sein. Unterhalb des Bundes 8 ist die beiden Wägesystemen 2 gemeinsame Elektronik 11 angeordnet. Diese beinhaltet die notwendigen elektronischen Bauelemente sowie einen Stecker 12 für die elektrische Kontaktierung mit der Signalverarbeitungseinheit.

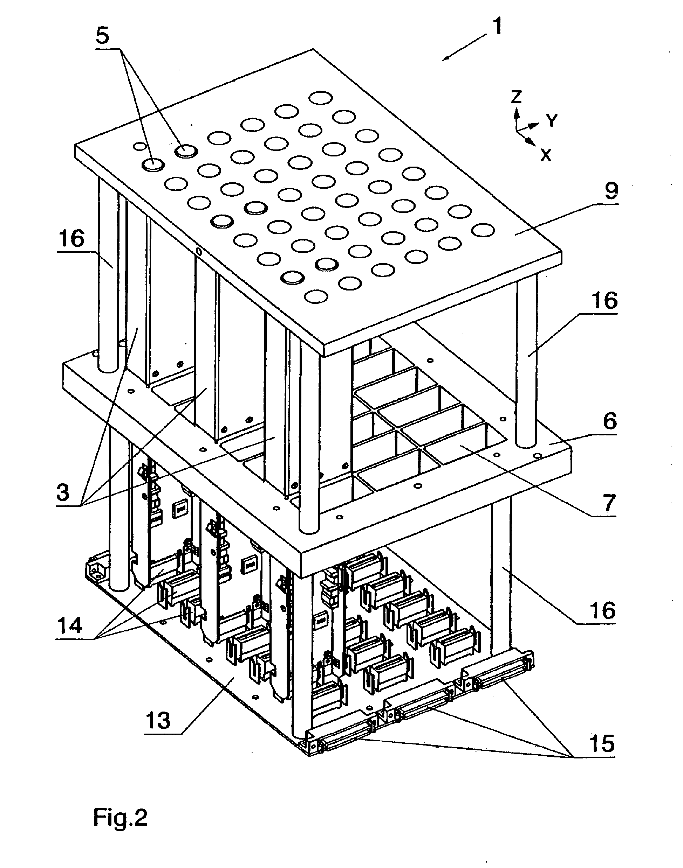

Fig. 2 zeigt den schematischen Aufbau der Wägeanlage 1 mit einigen in die wabenförmigen Ausbrüche 7 des Trägerelementes 6 eingesetzten Wägemodulen 3. Oberhalb des Trägerelementes 6 ist die Fixierplatte 9, unterhalb des Trägerelementes 6 die Verdrahtungsplatine 13 mit den einzelnen Steckplätzen 14 dargestellt. Über die Verdrahtungsplatine 13 und den auf ihr angeordneten Steckern wird die Verbindung 15 zur nicht dargestellten nachgeordneten Signalverarbeitungseinheit der Wägeanlage 1 hergestellt. Sowohl die Verdrahtungsplatine 13 als auch die Fixierplatte 9 werden über Verbindungselemente 16 relativ zum Trägerelement 6 positioniert. Die Verbindungselemente 16 sind hier zur schematischen Veranschaulichung als säulenförmige Abstandshalter dargestellt. In anderen Ausführungsformen können diese auch als entsprechend gestaltete Wand- oder Gehäuseelemente der Wägeanlage 1 ausgebildet sein. Den oberen Abschluss der Wägeanlage 1 bildet die Fixierplatte 9. Diese enthält Bohrungen, die einen Durchgriff der einzelnen Lastaufnehmer 5 der Wägemodule 3 ermöglichen. Die einzelnen Lastaufnehmer 5 bilden im konkreten Beispiel ein rechtwinkliges, äquidistantes Array.

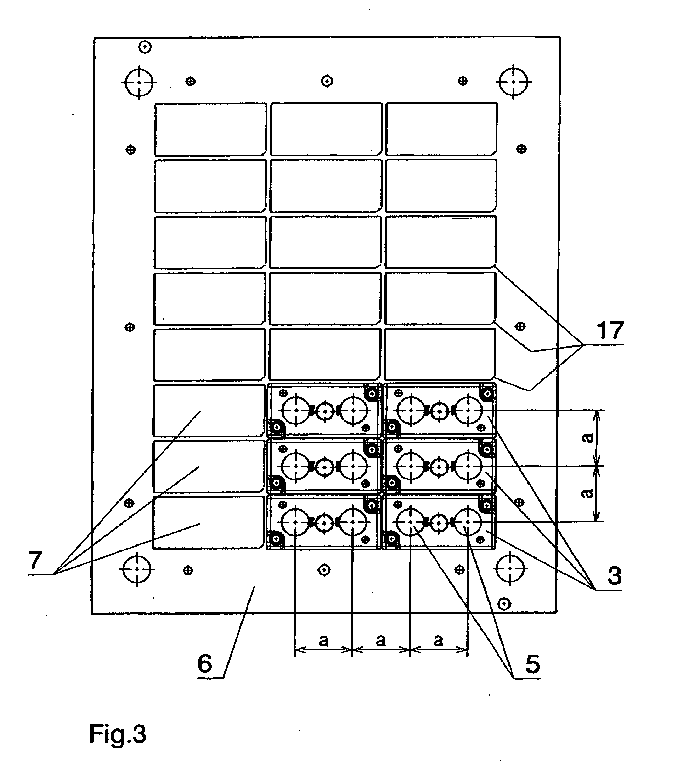

Fig. 3 zeigt die Aufsicht des Trägerelementes 6 mit den wabenförmigen Ausbrüchen 7 und einigen eingesetzten Wägemodulen 3. Um zu gewährleisten, dass die Wägemodule 3 alle im gleichen Richtungssinn eingesetzt werden, besitzen die wabenförmigen Ausbrüche 7 in einer Ecke eine Fase 17. Das komplementäre Gegenstück zu dieser Fase 17 findet sich am Bund 8 der Wägemodule 3 wieder. Gleiches lässt sich auch durch andere, den Richtungssinn der Wägemodule 3 kodierende Funktionselemente, etwa Stifte und entsprechende Bohrungen, erreichen.

Die einzelnen Lastaufnehmer 5 der Wägemodule 3 befinden sich in den Knotenpunkten eines rechtwinkligen, äquidistanten Arrays. Die Knotenpunktabstände des Arrays sind in Fig. 3 mit a bezeichnet.

Im Folgenden wird die Funktionalität der Wägeanlage 1 in Bezug auf den Austausch eines Wägemoduls 3 beschrieben, wobei auf die Wirkungsweise der Wägeanlage als solcher nicht eingegangen werden soll.

Nach Abnehmen der Fixierplatte 9 ist beispielsweise im Servicefall ein einfaches Austauschen einzelner Wägemodule 3 möglich. Dieses geschieht durch Ziehen des entsprechenden Wägemoduls 3 etwa über die Fixierelemente 10 durch ein entsprechendes Werkzeug. Anschließend kann das neue Wägemodul 3 in den wabenförmigen Ausbruch 7 des Trägerelementes 6 eingesetzt werden, wobei über den Bund 8 sowohl die exakte Positionierung in x- und y-Richtung, als auch die exakte Positionierung in z-Richtung und über die Fase 17 des wabenförmigen Ausbruches 7 der exakte Richtungssinn gewährleistet wird. Gleichzeitig erfolgt über den Stecker 12 die elektrische Kontaktierung der Elektronik 11 auf dem entsprechenden Steckplatz 14 der Verdrahtungsplatine 13. Diese wiederum beinhaltet die Verbindung 15 zur nachgeordneten Signalverarbeitungseinheit 16. Das Aufsetzen der Fixierplatte 9 stellt über die Fixierelemente 10 der einzelnen Wägemodule 3 sicher, dass ein eventueller geringer Kippfehler der einzelnen auf dem Trägerelement angeordneten Wägemodule korrigiert und eine abstandsgenaue Ausrichtung der einzelnen Lastaufnehmer zueinander in x- und y-Richtung gewährleistet wird.

Werden statt der Wägemodule einzelne Wägezellen benutzt, so erfolgt die Positionierung und Kontaktierung in entsprechender Weise.

### Bezugszeichenliste

- 1: Wägeanlage
- 2: Wägesystem
- 3: Wägemodul
- 4: Gehäuse
- 5: Lastaufnehmer
- 6: Trägerelement
- 7: wabenförmiger Ausbruch
- 8: Bund
- 9: Fixierplatte
- 10: Fixierelement
- 11: Elektronik
- 12: Stecker
- 13: Verdrahtungsplatine
- 14: Steckplatz
- 15: Verbindung zur nachgeordneten Signalverarbeitungseinheit
- 16: Verbindungselement
- 17: Fase

## Patentansprüche

1. Wägemodul (3) zum Einsetzen in eine Wägeanlage (1), wobei das Wägemodul (3) Mittel zur lösbaren mechanischen Fixierung auf einem Trägerelement (6) einer Wägeanlage (1) sowie Mittel (12) zur elektrischen Kontaktierung aufweist, **dadurch gekennzeichnet, daß**
zwei Wägesysteme (2) innerhalb eines gemeinsamen Gehäuses (4) zusammengefaßt sind, wobei die Wägesysteme (2) eine gemeinsame Elektronik (11) aufweisen, und in der Elektronik (11) die für die Wägesysteme (2) spezifischen Abgleichparameter gespeichert sind.

2. Wägemodul (3) nach Anspruch 1, wobei die Mittel zur lösbaren mechanischen Fixierung sowie die Mittel (12) zur elektrischen Kontaktierung so ausgebildet sind, daß die Kontaktierung gleichzeitig mit einer mechanischen Positionierung des Wägemoduls (3) realisiert werden kann.

3. Wägemodul (3) nach einem der Ansprüche 1 oder 2, wobei das Wägemodul einen Bund (8) aufweist, welcher zur Aufnahme und Ausrichtung in x-, y- und z-Richtung des Wägemoduls (3) in dem Trägerelement (6) der Wägeanlage (1) dient.

4. Wägemodul (3) nach einem der vorigen Ansprüche, wobei die Mittel (12) zur elektrischen Kontaktierung so ausgebildet sind, daß die Kontaktierung notwendiger elektrischer Verbindungen über Steckkontakte (12) bewirkt wird.

5. Wägemodul (3) nach einem der vorigen Ansprüche, wobei das Wägemodul Fixierelemente (10) aufweist, die derart gestaltet sind, daß mittels der Fixierelemente (10) ein Kippfehler des Wägemoduls (3) auf dem Trägerelement (6) korrigiert und eine abstandsgenaue Ausrichtung der Lastaufnehmer des Wägemoduls (3) zu Lastaufnehmern von benachbarten Wägemodulen gewährleistet werden kann.

6. Wägemodul (3) nach einem der vorigen Ansprüche, wobei das Wägemodul (3) so ausgebildet ist, daß die elektrische Kontaktierung zwischen der Elektronik (11) und einer nachgeordneten Signalverarbeitungseinheit erfolgt.

7. Wägemodul (3) nach einem der vorigen Ansprüche, wobei das Wägemodul (3) Funktionselemente, insbesondere eine angefaste Kante (17), Stifte oder Bohrungen aufweist, die derart ausgebildet sind, daß ein Einsetzen des Wägemoduls (3) in eine Wägeanlage (1) nur in einem vorgegebenen Richtungssinn möglich ist.

8. Wägemodul (3) nach einem der vorigen Ansprüche, wobei die Fixierelemente (10) derart gestaltet sind, daß das Wägemodul (3) über die Fixierelemente (10) aus der Wägeanlage (1) entnommen werden kann.

9. Wägemodul (3) nach einem der vorigen Ansprüche, wobei das Wägemodul (3) ein Seitenverhältnis von 1:2 aufweist.

10. Wägeanlage (1) mit mehreren Wägemodulen (3) gemäß einem der Ansprüche 1 bis 9 und einem Trägerelement (6) zur separaten Verwiegung von mehreren Wägegütern, wobei die Wägemodulen (3) im Wesentlichen identisch ausgebildet sind, in einem zweidimensionalen Array austauschbar angeordnet sind.

11. Wägeanlage (1) nach Anspruch 10, wobei in z-Richtung ober alb des Trägerelementes (6) beabstandet eine Fixierplatte (9) angeordnet ist, und wobei die Wägemodule (3) Fixierelemente (10) aufweisen, welche ausgelegt sind, um über komplementäre Ausnehmungen in der Fixierplatte (9) den Kippfehler der einzelnen auf dem Trägerelement (6) angeordneten Wägemodule (3) zu korrigieren und in x- und y-Richtung eine abstandsgenaue Ausrichtung der einzelnen Lastaufnehmer (5) zueinander zu gewährleisten.

12. Wägeanlage (1) nach einem der Ansprüche 10 oder 11, **dadurch gekennzeichnet, dass** die Wägemodule (3) über Fixiermittel verfügen und dass die Wägemodule (3) bei gelöster Fixierung von dem Trägerelement (6) nach oben abhebbar und aus der Array-Anordnung herausnehmbar sind.

13. Wägeanlage (1) nach einem der Ansprüche 10 bis 12, **dadurch gekennzeichnet, dass** die Wägemodule (3) eine etwa rechteckige Grundfläche aufweisen, bei der die eine Kantenlänge etwa doppelt so lang ist wie die andere Kantenlänge, und dass die Wägemodule (3) so angeordnet sind, dass die Lastaufnehmer (5) ein rechtwinkliges, äquidistantes Array bilden.

14. Wägeanlage (1) nach einem der Ansprüche 10 bis 13, **dadurch gekennzeichnet, dass** der Knotenpunktabstand a des rechtwinkligen, äquidistanten Arrays weniger als 3 cm beträgt.

15. Wägeanlage (1) nach einem der Ansprüche 10 bis 14, **dadurch gekennzeichnet, dass** das Trägerelement (6) wabenförmige Ausbrüche (7) zur Aufnahme der Wägemodule (3) aufweist, dass die Wägemodule (3) ihrerseits einen, den wabenförmigen Ausbrüchen (7) des Trägerelementes komplementären Bund (8) aufweisen, der die Wägemodule (3) bei der Aufnahme in den wabenförmigen Ausbrüchen (7) des Trägerelementes (6) in x-, y- und z-Richtung positioniert.

16. Wägeanlage (1) nach einem der Ansprüche 10 bis 15, **dadurch gekennzeichnet, dass** in z-Richtung unterhalb des Trägerelementes (6) beabstandet eine Verdrahtungsplatine (13) angeordnet ist, auf der sich jedem Wägemodul (3) zugeordnete Steckplätze (14) für die elektrische Kontaktierung der für den Betrieb notwendigen Elektronik (11) der einzelnen Wägemodule (3) mit der nachgeordneten Signalverarbeitungseinheit befinden und welche die elektrische Kontaktierung gleichzeitig mit der mechanischen Positionierung der Wägemodule (3) auf dem Trägerelement (6) realisieren.

## Claims

1. A weighing module (3) for insertion into a weighing system (1), wherein the weighing module (3) has means for detachably mechanically fixing it to a carrier element (6) of a weighing system (1) and means (12) for electrical contacting, **characterized in that**
two weighing units (2) are arranged within a shared housing (4) wherein the weighing units (2) have shared electronics (11) and calibration parameters specific to the weighing units (2) are saved in the electronics (11).

2. The weighing module (3) according to Claim 1, wherein the means for the detachable mechanical fixing and the means (12) for electrical contacting are designed such that the contacting can be realized simultaneously along with a mechanical positioning of the weighing module (3).

3. The weighing module (3) according to one of Claims 1 or 2, wherein the weighing module has a collar (8) that serves to accommodate and orient in x, y and z directions of the weighing module (3) in the carrier element (6) of the weighing system (1).

4. The weighing module (3) according to one of the previous claims, wherein the means (12) for electrical contacting are designed such that necessary electrical connections are contacted using plug connectors (12).

5. Weighing module (3) according to one of the previous claims, wherein the weighing module has fixation elements (10) that are designed such that by means of the fixation elements (10), an inclination error of the weighing module (3) on the carrier element (6) can be corrected and an orientation of the load bearers of the weighing module (3) at a precise distance to load bearers of neighboring weighing modules can be ensured.

6. The weighing module (3) according to one of the previous claims, wherein the weighing module (3) is designed such that the electrical contacting is implemented between the electronics (11) and a downstream signal processing unit.

7. The weighing module (3) according to one of the previous claims, wherein the weighing module (3) has functional elements, especially a beveled edge (17), pins or holes that are designed such that inserting the weighing module (3) into a weighing system (1) is only possible in a predetermined direction.

8. The weighing module (3) according to one of the previous claims, wherein the fixation elements (10) are designed such that the weighing module (3) can be removed from the weighing system (1) by way of the fixation elements (10).

9. The weighing module (3) according to one of the previous claims, wherein the weighing module (3) has an aspect ratio of 1:2.

10. A weighing system (1) with multiple weighing modules (3) according to one of Claims 1 to 9 and a carrier element (6) for separate weighing of multiple weighing samples, wherein the weighing modules (3) are essentially identical and arranged interchangeably within a two-dimensional array.

11. The weighing system (1) according to Claim 10, wherein a fixation plate (9) is arranged in the z direction above and at a distance to the carrier element (6) and wherein the weighing modules (3) have fixation elements (10) designed to correct the inclination errors of the individual weighing modules (3) arranged on the carrier element (6) by way of complementary openings in the fixation plate (9) and to ensure a precisely spaced arrangement in x and y directions of the individual load bearers (5) relative to one another.

12. The weighing system (1) according to one of Claims 10 or 11 **characterized in that** the weighing modules (3) are equipped with means of fixation and **in that**, when the fixation is detached from the carrier element (6), the weighing modules (3) can be lifted upwards and removed from the array arrangement.

13. The weighing system (1) according to one of Claims 10 to 12 **characterized in that** the weighing modules (3) have an approximately rectangular surface in which the length of one side is approximately twice as long as the other side and the weighing modules (3) are arranged such that the load bearers (5) form a rectangular, equidistant array.

14. The weighing system (1) according to one of Claims 10 to 13 **characterized in that** the node spacing a of the rectangular, equidistant array is less than 3 cm.

15. The weighing system (1) according to one of Claims 10 to 14 **characterized in that** the carrier element (6) has honeycomb-shaped recesses (7) to accommodate the weighing modules (3), **in that** the weighing modules (3) themselves have a collar (8) which is complementary to the honeycomb-shaped recesses (7) of the carrier element, and which, during insertion, positions the weighing modules (3) in x, y and z directions within the honeycomb-shaped recesses (7) of the carrier element (6).

16. The weighing system (1) according to one of Claims 10 to 15 **characterized in that** a wiring board (13) is arranged in the z direction beneath and at a distance to the carrier element (6), and on which are arranged plug-in points (14), associated with each weighing module (3), for the electrical contacting of the electronics (11) necessary for operation for the individual weighing modules (3), along with the downstream signal processing unit, and which realize electrical contacting simultaneously with the mechanical positioning of the weighing modules (3) on the carrier element (6).

## Revendications

1. Module de pesée (3) pour l'insertion dans une installation de pesée (1), dans lequel le module de pesée (3) présente des moyens pour la fixation mécanique amovible sur un élément support (6) d'une installation de pesée (1) ainsi que des moyens (12) pour la mise en contact électrique, **caractérisé en ce que** deux systèmes de pesée (2) sont réunis au sein d'un logement commun (4), dans lequel les systèmes de pesée (2) présentent une électronique commune (11) et les paramètres de réglage spécifiques aux systèmes de pesée (2) sont mémorisés dans l'électronique (11).

2. Module de pesée (3) selon la revendication 1, dans lequel les moyens pour la fixation mécanique amovible ainsi que les moyens (12) pour la mise en contact électrique sont réalisés de sorte que la mise en contact peut être réalisée simultanément à un positionnement mécanique du module de pesée (3).

3. Module de pesée (3) selon l'une quelconque des revendications 1 ou 2, dans lequel le module de pesée présente un lien (8) qui sert à la réception et l'orientation dans le sens x, y et z du module de pesée (3) dans l'élément support (6) de l'installation de pesée (1).

4. Module de pesée (3) selon l'une quelconque des revendications précédentes, dans lequel les moyens (12) pour la mise en contact électrique sont réalisés de sorte que la mise en contact de connexions électriques nécessaires est effectuée par le biais de contacts à fiches (12).

5. Module de pesée (3) selon l'une quelconque des revendications précédentes, dans lequel le module de pesée présente des éléments de fixation (10) qui sont configurés de telle sorte qu'une erreur de basculement du module de pesée (3) sur l'élément support (6) peut être corrigée au moyen des éléments de fixation (10) et une orientation équidistante des capteurs de charge du module de pesée (3) par rapport à des capteurs de charge de modules de pesée voisins peut être garantie.

6. Module de pesée (3) selon l'une quelconque des revendications précédentes, dans lequel le module de pesée (3) est réalisé de sorte que la mise en contact électrique s'effectue entre l'électronique (11) et un module de traitement de signaux disposé en aval.

7. Module de pesée (3) selon l'une quelconque des revendications précédentes, dans lequel le module de pesée (3) présente des éléments fonctionnels, notamment une arête biseautée (17), des broches ou des alésages, qui sont réalisés de telle sorte qu'une insertion du module de pesée (3) dans une installation de pesée (1) est possible uniquement dans un sens prédéfini.

8. Module de pesée (3) selon l'une quelconque des revendications précédentes, dans lequel les éléments de fixation (10) sont configurés de telle sorte que le module de pesée (3) peut être retiré de l'installation de pesée (1) par le biais des éléments de fixation (10).

9. Module de pesée (3) selon l'une quelconque des revendications précédentes, dans lequel le module de pesée (3) présente un rapport latéral de 1/2.

10. Installation de pesée (1) avec plusieurs modules de pesée (3) selon l'une quelconque des revendications 1 à 9 et un élément support (6) pour la pesée séparée de plusieurs produits de pesée, dans laquelle les modules de pesée (3) sont réalisés de manière essentiellement identique, sont disposés de manière interchangeable dans un réseau bidimensionnel.

11. Installation de pesée (1) selon la revendication 10, dans laquelle une plaque de fixation (9) est disposée dans le sens z à distance au-dessus de l'élément support (6), et
dans laquelle les modules de pesée (3) présentent des éléments de fixation (10) qui sont conçus pour corriger l'erreur de basculement des modules de pesée individuels (3) disposés sur l'élément support (6) par le biais d'évidements complémentaires dans la plaque de fixation (9) et garantir une orientation équidistante des capteurs de charge individuels (5) les uns par rapport aux autres dans le sens x et y.

12. Installation de pesée (1) selon l'une quelconque des revendications 10 ou 11, **caractérisée en ce que** les modules de pesée (3) disposent de moyens de fixation et que les modules de pesée (3) peuvent être soulevés vers le haut en cas de fixation desserrée de l'élément support (6) et peuvent être retirés de l'agencement en réseau.

13. Installation de pesée (1) selon l'une quelconque des revendications 10 à 12, **caractérisée en ce que** les modules de pesée (3) présentent une surface de base approximativement rectangulaire pour laquelle une des longueurs d'arête est environ deux fois aussi longue que l'autre longueur d'arête, et que les modules de pesée (3) sont disposés de sorte que les capteurs de charge (5) forment un réseau équidistant rectangulaire.

14. Installation de pesée (1) selon l'une quelconque des revendications 10 à 13, **caractérisée en ce que** l'écart de point nodal a du réseau équidistant rectangulaire se monte à moins de 3 cm.

15. Installation de pesée (1) selon l'une quelconque des revendications 10 à 14, **caractérisée en ce que** l'élément support (6) présente des creux alvéolaires (7) pour la réception des modules de pesée (3), que les modules de pesée (3) présentent de leur côté un lien (8) complémentaire aux creux alvéolaires (7) de l'élément support qui positionne les modules de pesée (3) lors de la réception dans les creux alvéolaires (7) de l'élément support (6) dans le sens x, y et z.

16. Installation de pesée (1) selon l'une quelconque des revendications 10 à 15, **caractérisée en ce qu'**une platine de câblage (13) est disposée dans le sens z à distance en dessous de l'élément support (6), sur laquelle se trouvent des emplacements d'enfichage (14) associés à chaque module de pesée (3) pour la mise en contact électrique de l'électronique (11) nécessaire pour le fonctionnement des modules de pesée individuels (3) avec le module de traitement de signaux disposé en aval et qui réalisent la mise en contact électrique simultanément au positionnement mécanique des modules de pesée (3) sur l'élément support (6).
